# EUROPEAN PATENT APPLICATION

(11) **EP 2 869 421 A1**
(43) Date of publication of application: **06.05.2015**
(21) Application number: 13191262.8
(22) Date of filing: 01.11.2013
(51) Int. Cl.: H02J 3/00

(54) **Electrical power management of excess power**

(71) Applicant: Amplex Denmark ApS, 8000 Aarhus C (DK)
(72) Inventor: Jensen, Jens Hørup, 8000 Aarhus C (DK)
(74) Representative: Plougmann & Vingtoft A/S

(57) **Abstract**

The invention relates to a power management system configured to utilise electrical loads for consuming excess or surplus power in an electrical network. The power management system is particularly configured to be used with loads, e.g. street lights, which are characterised in that they are guaranteed to be available (202, 203) for consuming electrical power during certain periods (213).

## Description

### FIELD OF THE INVENTION

The invention relates to management of electrical power networks, particularly to management of electrical power networks when there is an over production of electrical power.

### BACKGROUND OF THE INVENTION

Electrical power is produced and supplied via an electrical power network to electrical loads which consumes the produced power. In order to maintain stable conditions on the power network, e.g. a stable frequency of the alternating current flowing in the network, there needs to be a balance between produced power and consumed power.

In an electrical power network wherein power is supplied from wind turbine generators and solar power plants situations may arise wherein the produced amount of electrical power is higher than the consumed amount of power due to the varying production from such sustainable power production units.

Accordingly, it is an increasing problem that unbalance between produced and consumed electrical power may arise due to varying power productions from e.g. wind turbine generators and solar power plants.

WO2012137104 discloses control of power consumption in a system comprising power consuming devices like lighting devices, for example, performed by dividing the power consuming devices of the system into a plurality of groups and by taking into account power consumption or load shedding or restoration capability for each group. Further, the invention implements an auction mechanism for adjusting power consumption or load in the lighting system.

WO2012084196 discloses a responsive load which includes at least one power-consuming device adapted to be connected via an electrical power network to a power generation arrangement, and adapted to be connected via a communication arrangement to a control arrangement, wherein the responsive load is operable to provide an autonomous load response depending upon a characteristic of an electrical supply, for example electrical energy cost, frequency and/or electrical supply magnitude. The responsive load is operable to provide an autonomous load response whose characteristics are determined by a control signal received at the responsive load which determines a manner of operation of the responsive load, and/or to provide an autonomous load response depending upon one or more processes which have been previously executed by the responsive load.

### SUMMARY OF THE INVENTION

In general, the invention preferably seeks to alleviate or eliminate one or more of the above mentioned disadvantages singly or in any combination. In particular, it may be seen as an object of the present invention to provide a method that solves the above mentioned problems, or other problems, of the prior art.

To better address one or more of these concerns, in a first aspect of the invention an electrical power management system for controlling one or more of a plurality of loads connected to an electrical power network is presented that comprises:
- a storage containing load availability information about future periods of time wherein the loads are not activated,
- a consumption prediction system for determining available power consumption capacities of one or more of the plurality of loads based on the load availability information and power consumption information of one or more of the loads, so that the available power consumption capacities are determined for the future periods of time wherein the loads are not activated,
- a planning system for determining one or more of the plurality of loads that should be activated for consuming a contract power during a contract period, wherein the determining is performed so that a combination of one or more of the determined available power consumption capacities approximates the contract power,
- an input for receiving a control input indicating start of consuming the contract power during the contract period,
- an activation system for activating the determined loads during the contract period, wherein
- the power management system is configured to determine the power consumption information at least in part from measured consumptions of one or more of the plurality of loads, wherein the measured consumptions are performed in a period of time wherein the loads are activated.

Advantageously the combination of measured power consumptions and load availability information may provide a very precise prediction of future available power consumption capacities that can be sold as a future guaranteed available power capacity to suppliers of electrical energy. Furthermore, the predicted future available power consumption capacity may enable the operator of the loads to sell a contract power during a contract period in response to a sudden demand without risking that sold capacity is not available during the contract period.

Advantageously, the loads are characterised as loads which do not need to be active for a certain period, like street lights or charging stations which may have a guaranteed period wherein they are not consuming power.

It is understood that the load availability information about future periods of time wherein the loads are not activated may be stored in a storage comprised by the system or may otherwise be retrievable by the power management system from other systems or storages.

In an embodiment the loads are street lights or other lighting installations.

In an embodiment the electrical power management system further comprises
- an input for setting an availability status of loads, wherein
- the consumption prediction system is additionally configured for determining the available power consumption capacities of one or more of the plurality of loads based on the availability status of the loads.

In an embodiment the electrical power management system further comprises
- a capacity system for determining a guaranteed load capacity over a given future period of time based on the load availability information and the available power consumption capacities.

In an embodiment the planning system is further configured for determining one or more of the plurality of loads that should be activated for consuming the contract power during the contract period depending on a priority value associated with one or more of the loads.

In an embodiment the electrical power management system is configured for monitoring usage of one or more of the loads, wherein
- the planning system is further configured for determining one or more of the plurality of loads that should be activated for consuming the contract power during the contract period based on the usage of the loads.

In an embodiment the management system is configured to group one or more of the loads into a group of loads so that the group has a pre-determined available power consumption, wherein
- the planning system is configured for determining one or more of the plurality of groups of loads that should be activated for consuming the contract power during the contract period, wherein the determining is performed so that a combination of one or more pre-determined available power consumption capacities approximates the contract power.

In an embodiment the input of the power management system is configured to receive the control input containing input information relating to a power to be consumed and/or a period of time wherein power should be consumed, wherein the power management system is configured to determine the contract power and the contract period from the input information.

In an embodiment the activation system is configured for activating the determined loads during the contract period in response to the control input after a delay. The delay may be predefined or derived from the input signal containing input information relating to a power to be consumed.

A second aspect of the invention relates to an electrical power management method for consuming excess power, the method comprises:
- obtaining load availability information about future periods of time wherein the loads are not activated,
- determining available power consumption capacities of one or more of the plurality of loads based on the load availability information and power consumption information of one or more of the loads, so that the available power consumption capacities are determined for the future periods of time wherein the loads are not activated,

- determining one or more of the plurality of loads that should be activated for consuming a contract power during a contract period, wherein the determining is performed so that a combination of one or more of the determined available power consumption capacities approximates the contract power,
- receiving a control input indicating start of consuming the contract power during the contract period,
- activating the determined loads during the contract period.

The method may further comprise the step of determining the power consumption information at least in part from measured consumptions of one or more of the plurality of loads, wherein the measured consumptions are performed in a period of time wherein the loads are activated.

A third aspect of the invention relates to a computer program product comprising program code instructions which when executed by a processor of a computer device enables the processor to carry out the method according to the second aspect.

A fourth aspect of the invention relates to a computer-readable medium comprising a computer program product according to the third aspect. The computer-readable medium may be a CD, a memory, an electronic circuit or other physical medium capable of storing data. The computer-readable medium may be a non-transitory medium.

In general the various aspects of the invention may be combined and coupled in any way possible within the scope of the invention. These and other aspects, features and/or advantages of the invention will be apparent from and elucidated with reference to the embodiments described hereinafter.

In summary the invention relates to a power management system configured to utilise electrical loads for consuming excess power in an electrical network. The power management system is particularly configured to be used with loads, e.g. street lights, which are **characterised in that** they are guaranteed to be available for consuming electrical power during certain periods.

### BRIEF DESCRIPTION OF THE DRAWINGS

Embodiments of the invention will be described, by way of example only, with reference to the drawings, in which
Fig. 1 illustrates a general power trading scheme,
Fig. 2 illustrates principles for paying consumers for consuming excess power,
Fig. 3 illustrates an example of an electrical consumer comprising a plurality of loads, and
Fig. 4 shows an electrical power management system for activating loads to consume contract power.

### DESCRIPTION OF AN EMBODIMENT

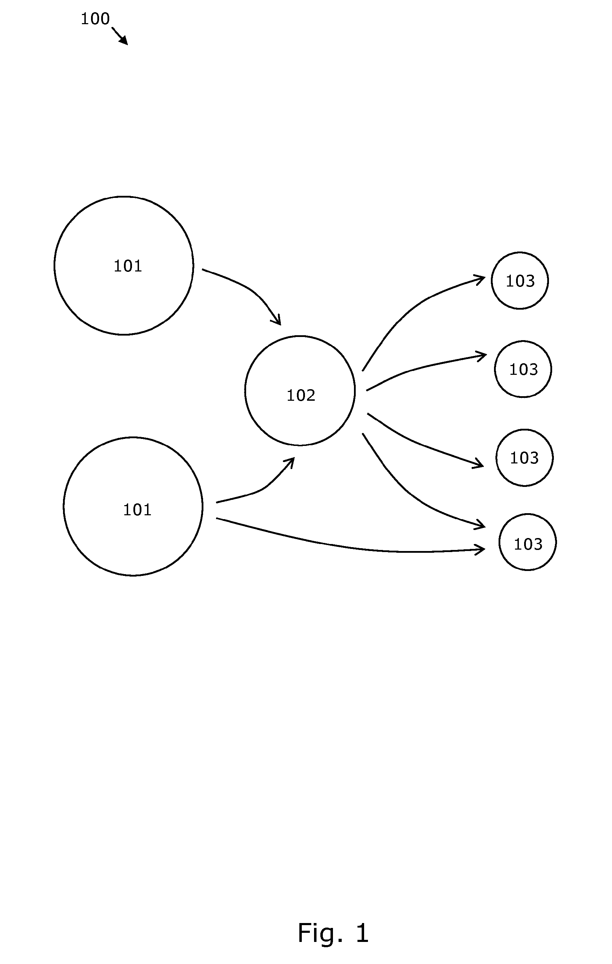

Fig. 1 illustrates a general power trading scheme for trading electrical power between network operators 101 and consumers of electrical power 103. A network operator 101 is responsible for ensuring that there is a balance between supply of electrical power and consumption of electrical power on the grid. An example of a network operator is Energinet.dk which operates the grid in Denmark. In Europe the European grid is controlled by different network operators 101. Suppliers of power comprise power plants (e.g. coal fired plants), wind turbines, solar power plants and other suppliers. Consumers of electrical powers comprise e.g. factories, private households and other installations such as electrical installations in a city, e.g. street lights.

A consumer of electrical power is understood broadly as an electrical installation, electrical equipment, an electrical network, or other physical installation which comprises one or more electrical loads. For example, a street light installation may be considered a consumer wherein each street light or groups of street lights constitute electrical loads. The consumer of electrical power may be operated by an operator. For example, a street light installation may be operated by a municipality who owns the light installation or other operator.

Various factors influence the balance between power supply and power consumption. For example, if wind is low or if a power plant is not able to produce full capacity the power capacity may become lower than the power demand from the consumers. This imbalance has to be corrected by increasing supply e.g. from power plants or by reducing the power demand.

The opposite situation where the power capacity is higher than the power demand may arise typically due to increased power production from wind turbines or solar power plants. It may be impractical to reduce power production in such a situation. Instead the excess power can be consumed by the consumers of electrical power 103.

In a situation where a network operator predicts or determines an actual or future over capacity on the grid operated by the operator, i.e. a situation of excess power production, the network operator may buy load capacity from a consumer 103. Accordingly, a consumer 103 may be paid for consuming excess power. A network operator 101 may communicate an overcapacity to an aggregator 102 which communicates with one or more consumers 103, e.g. by buying load capacities from different consumers 103 so that the total purchased load capacity matches the over capacity. Alternatively, a network operator 101 may communicate an over capacity directly to one or more consumers 103.

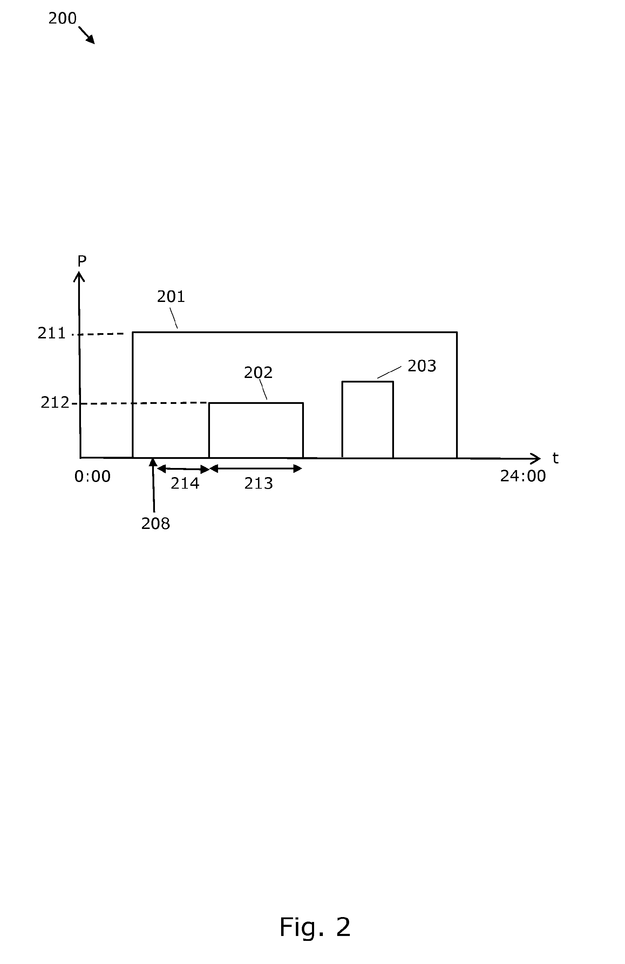

Fig. 2 illustrates different principles for paying consumers 103 for consuming excess power.

For example, a consumer may be paid for making a guaranteed load capacity 201 available for a network operator 101 or an aggregator 102. The guaranteed load capacity 201 may define a power capacity 211 that is guaranteed available during a period, e.g. within days (between times 0:00 and 24:00), e.g. days in a week or work week.

In another example, a consumer may be paid for actually consumed energy 202, 203 in response to a request from an operator 101 or an aggregator 102 to consume a requested amount of power 212 during a requested period 213. The request from an operator 101 may be in the form of a control input 208 supplied to an electrical power management system controlling loads in a consumer's 103 power network. The request 208 may initiate a break 214 before the consumption of excess power has to be started by the consumer 103.

In advance of the request to consume excess power, the operator 101 or aggregator 102 may have initiated an auction for buying a given power capacity, where consumers 103 (i.e. an operator of the consumer) may make a bid for a part or the entire auctioned excess power capacity. Thus, a consumer 103 or an operator of the consumer may make a bid wherein the consumer offers to consume a given power 212, during a given period 213 within e.g. a day, possibly repeated over succeeding days.

In order to make a bid to the auctioned power capacity the consumer 103 (or its operator) should know about when loads in the consumer's power network are available for consuming power and how much power the consumer's power network is capable of consuming.

An embodiment of the invention provides an electrical power management system configured for managing and controlling consumption of excess power.

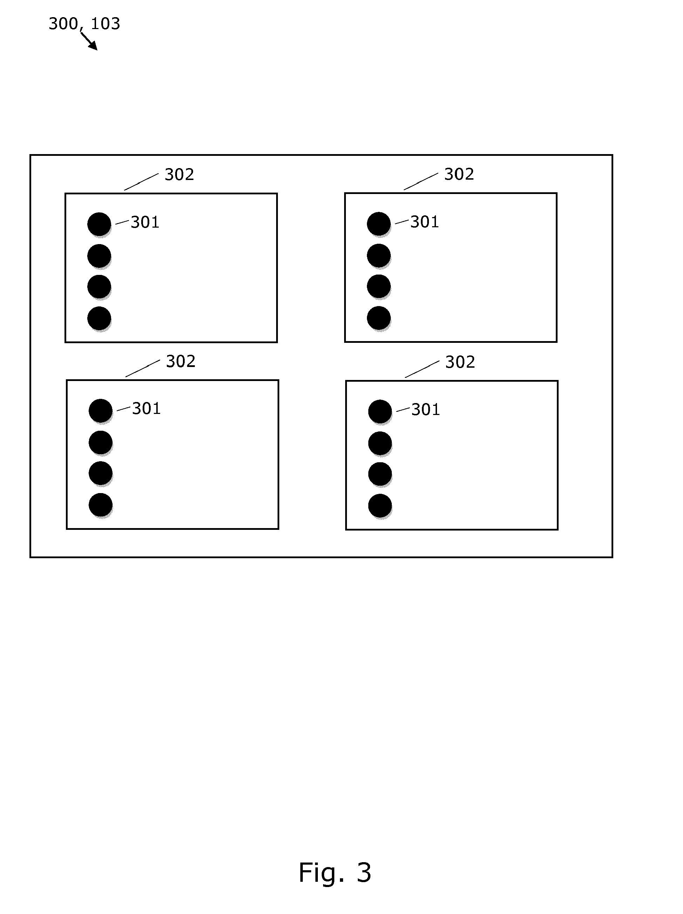

Fig. 3 shows an example of a consumer 300, 103 connected to a power network (the power network is not illustrated). The consumer, i.e. an electrical load, includes a plurality of loads 301, which may be arranged in groups of loads 302.

In an embodiment a load 301 includes one or more street lights. Thus, the consumer 300 may be a street light system comprising a plurality of individual street lights 301 which may be arranged in groups of street lights 301.

Street lights may be particularly useful as loads in an electrical power management system for consuming excess power, i.e. for consuming contract power during a contract period. Street light are **characterised in that** they have two states: an active state wherein they consumes power and a de-active state wherein they do not consume power. Thus, street lights are **characterised in that** they can provide a guaranteed load capacity 201.

In the active state the street lights may further have different load levels, i.e. the street lights may have different levels of lighting intensities and, thereby, different power consumptions.

In a situation wherein the street lights are operated to generate light at a level which is lower than the maximum lighting intensity, the load availability information would contain information about future periods of time wherein the loads are activated in a lower (non-maximal) intensity level. Further, in such a situation wherein the street lights are operated to generate light at a level which is lower than the maximum lighting intensity, the remaining power consumption capacity could be used as an available power consumption capacity for periods of time wherein the loads are activated at an intensity level which is not maximal. In this case the planning system would be configured for determining one or more of the plurality of loads that should be activated to generate a higher lighting intensity for consuming a contract power during a contract period. Further in this situation the power management system would configured to determine the power consumption information, i.e. an increased power consumption information, at least in part from measured consumptions of one or more of the plurality of loads activated in a maximal intensity level.

Another example of a consumer comprising loads which can provide a guaranteed load capacity 201 is a charging station (here the electrical chargers are loads) for charging batteries of electrical cars in a car fleet during periods wherein the cars are not used, e.g. during nights or during week-ends, and therefore located at the charging station for being charged.

In order to provide a guaranteed load capacity 201, the charging station may be configured so that cars or not charged in a pre-determined period, e.g. in a start period (or periods) of a week-end the chargers are off (e.g. during daylight times or during evenings). A later charging period is reserved to ensure that batteries will be charged eventually.

In this example, the load availability information relates to the pre-determined period wherein the chargers are off (and wherein the cars are located at the charging station). The power consumption information relates to the power consumed during charging. In order to determine the power consumption information (e.g. for use in a bid in an auction), a short initial test charging may be performed wherein the power consumption of the chargers is measured in a period of time wherein the chargers are not activated (except for the initial test charging). Alternatively or additionally, the power consumption information may be determined in part from measurements in short initial test charging and in part from previous charging periods, e.g. using statistical analysis. The initial test charging for determining power consumption ensures that a guaranteed load capacity 201 can be determined independently of e.g. a varying number of cars (some cars may be away for service purposes).

Each of the loads 301, groups of loads 302 or any collection of loads may be controllable to be switched on or off in response to a control signal.

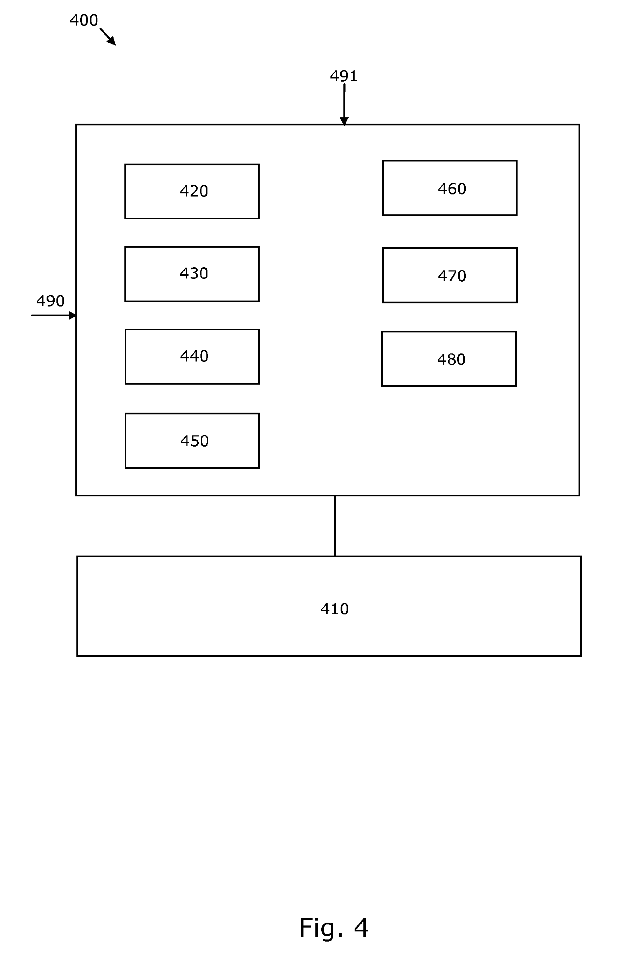

Fig. 4 shows an electrical power management system 400 for controlling, e.g. switching on or switching off, one or more of a plurality of loads 301 connected to an electrical power network. The controlling of the loads may performed by a control system 410 associated with the loads, i.e. the control system may or may not be part of the electrical power management system 400.

The power management system 400 may contain a storage 420 containing load availability information about future periods of time wherein the loads 301 are available for consuming power (periods wherein the loads are not activated or possibly activated at a non-maximum power consumption level). Alternatively or additionally, the system 400 may otherwise be capable of retrieving such load availability information, e.g. from external database systems.

The power management system 400 may further comprise a consumption prediction system 430 for determining available power consumption capacities of one or more of the plurality of loads based on the load availability information and power information of one or more of the loads, so that the available power consumption capacities are determined for the future periods of time wherein the loads are available for consuming power, i.e. wherein the loads are not activated and consumes no or substantially no power, or possibly wherein the loads are activated at a non-maximal power consumption level so that the loads are capable of consuming an additional power equal to the difference between maximal power consumption level and the non-maximal power consumption level . A load which is not activated may comprise a load on stand-by which consumes no or substantially no power.

The power information may include a power value that is consumed by the load when the load is active.

Thus, a load (which may comprise one or more consumers of electrical power) has an available power consumption capacity which defines a power that the load is able to consume during a given period. For example, the available power consumption capacity of a street light or a group of street lights could define a power (which may have been determined from previous measurements) that is available during daylight hours, e.g. between 8.00 hours and 17.00 hours.

The power management system 400 may have access to a contract power and a contract period, wherein the contract period indicates a period, wherein the contract power has to be consumed by one or more of the loads. The contract power may be equal to the requested amount of power 212 and the contract period may be equal to the requested period 213. The access may be embodied in different ways. For example, the contract power and the contract period may be derived from a signal communicated to the power management system 400. Alternatively or additionally, contract values may be retrieved from an internal storage comprised by the power management system 400 or an external storage. Thus, contract power and contract periods could be provided to the power management system 400 automatically, e.g. via an input signal containing information about the contract values, or manually via a user interface.

The power management system 400 further comprises a planning system 440 for determining one or more of the plurality of loads 301 that should be activated for consuming the contract power during the contract period. The planning system 440 may be configured to determine the loads 301 so that a combination of one or more of the determined available power consumption capacities approximates the contract power.

For example, available power consumption capacities have been determined for a plurality of groups of street lights. Available power consumption capacities which are available during the contract period associated the contract power are combined to approximate the contract power, e.g. so that a combination is determined which exceeds the contract power by the smallest possible power.

Thus, in the determination of a combination of the loads 301 the planning system 440 may further be configured to take into account the available period defined by available power consumption capacity so that only loads which are available for consuming power during the contract period are considered for determining which loads should be activated for consuming the contract power.

The power management system 400 further comprises an input 490 for receiving a control input, e.g. the request 208 from a network operator 101, indicating start of consuming the contract power during the predetermined contract period within the predetermined period.

The power management system 400 is configured, e.g. by means of an activation system 450, to activate the determined loads 301 during the predetermined contract period, e.g. via the control system 410. Furthermore, the electrical power management system may be configured to activate the determined loads 301 during the contract period after a predefined delay, e.g. a delay derived from delay information contained in the control signal or a fixed delay.

The load availability information, e.g. a load availability period of time, may be provided from operation schemes containing information about when loads 301 or groups of loads 302 will be activated and, thereby, consuming power during a given period, e.g. a day. In an embodiment wherein the loads 301 are street lights, the load availability information may be determined from a scheme of times defining when the lights should be on and off. Groups of lights 302 may have different load availability information. For example, a group of lights, e.g. lights in an industrial area, may have a longer period where they are turned off compared to other groups. Accordingly, by having a consumer 300 with different predefined load availability periods, it is possible for the operator of the consumer 300 to make bids for auctioned power capacities having contract periods that are longer than load availability periods of other load groups 302.

The available power consumption capacities of one or more of the plurality of loads 301 may be determined by the consumption prediction system 430 based on available load information, e.g. information about the actual power load values of one or more loads 301 such as power values of installed lamps in street lights 301. Accordingly, the power consumption information may be obtained from such available load information.

Alternatively, the available power consumption capacities may be determined from measured power consumptions of one or more loads 301 or groups 302 or from a combination of measured loads and other available load information such as nominal power values of loads 301 or power values of installed lamps.

Accordingly, in an embodiment the power management system is configured to determine power consumption information from measured consumptions of one or more of the plurality of loads, wherein the measured consumptions are performed in a period of time wherein the loads are activated.

This configuration of the power management system may be embodied by a measurement system 460 for retrieving and/or storing measured consumptions of one or more of the plurality of loads. The measurement system is configured to acquire the measurements in a period of time wherein the loads are activated, i.e. wherein they consume power. The measurements may be performed by power measurement devices (not shown) capable of measuring power consumption of individual loads 301 or a group of loads 302. The power measurement devices may be part of the control system 410, the loads 301, the groups of loads 302 or arranged in other ways.

Thus, an available power consumption determined from load availability information and power consumption information may be in the form of a power, preferably a constant or substantially constant power that a consumer 103 is capable of consuming during a determined period.

The planning system 440 may be configured for determining one or more of the plurality of loads 301 that should be activated for consuming the contract power so that a sum loads, i.e. a sum of the power loads of the determined available power consumption capacities, approximates the contract power. Approximating means that the consumption of the selected plurality of loads should be as close as possible to the contract power. Preferably, the consumption of the selected plurality of loads should be equal to or greater than the contract power during the contract period 213.

In an embodiment the planning system 440 is further configured for determining one or more of the plurality of loads that should be activated for consuming the contract power during the contract period depending on a priority value associated with one or more of the loads. Accordingly, a priority value may be assigned to a load 301 or to a group of loads 302. For example, if a lamp of a street light is about to be replaced that street light may be given a high priority so that such lamps are selected with a higher priority than other lamps for consuming excess power. In another example, higher priorities may be given to LED lamps than other types of lamps since LED lamps have a longer life time than other types of lamps and, therefore, the practical life time of LED lamps is not affected if they are used for consuming excess power.

In an embodiment the electrical power management system is configured for monitoring usage - e.g. in terms of operating hours and/or number of times that a load is switched on - of one or more of the loads during a given period, e.g. during the operative life time of a given load. The monitoring function may be embodied by a monitoring system 470 included in the electrical power management system 400. In this embodiment the planning system may further be configured for determining one or more of the plurality of loads that should be activated for consuming the contract power during the contract period based on the usage of the loads. Thereby, it may be possible to ensure that different loads 301, 302 are operated, e.g. active, approximately the same number of hours.

In an embodiment the management system is configured to group one or more of the loads so that the group has a pre-determined available power consumption. For example, loads 301 may be arranged into groups having certain power consumptions, e.g. power consumptions of 1 MW, so that the consumer can easily bid in to an auction by offering one or more load consumptions of 1MW. For that purpose the planning system 440 may be configured for determining one or more of the plurality of groups of loads that should be activated for consuming the contract power during the contract period, wherein the determining is performed so that a combination of one or more pre-determined available power consumption capacities approximates the contract power.

The power management system 400 further comprises an input 490 for receiving a control input, e.g. the request 208 from a network operator 101 indicating start of consuming the contract power during the predetermined contract period within the predetermined period.

The input 490 may be configured to receive control input containing one or more of the following input information:
- load information relating to a power to be consumed, e.g. a value of the contract power to be consumed,
- a period of time wherein power should be consumed, e.g. a values of the contract period,
- a start time defining the time where consumption of excess power should be initiated,
- an end time defining the time where consumption of excess power should be stopped, and
- a start now or stop now time defining immediate start or stop of consuming excess power.

The power management system 400 is configured to process the input information contained in the control input, e.g. configured to determine the contract power and the contract period from the input information.

The electrical power management system may further be configured with an input 491 for setting an availability status of one or more of the loads 301 or groups 302. The input 491 may be embodied by a user interface enabling a user to change the availability status of one or more of the loads 301. For example, a user may disable one or more loads 301 due to service on these loads, wherein the disabling indicates that these loads are not available for consuming excess power. In order to consider such availability settings of loads 301, the consumption prediction system may be configured for determining the available power consumption capacities of one or more of the plurality of loads based on the availability status of the loads. Accordingly, if an availability status of a load 301 indicates that a load is not available for consuming excess power, the consumption prediction system may simply be configured to ignore such loads. Alternatively or additionally, the load availability information may be set to a "not available status" based on the availability setting from the input 491.

Furthermore, the input 491 may be configured for setting an availability status including a non-available period wherein one or more of the loads are not available for consuming power. In this case the management system 400 may be configured to determine or modify the load availability information based on the availability status and the non-available period.

The power management system may further be configured with a capacity system 480 for determining a guaranteed load capacity 201 over a given future period of time based on the load availability information and the available power consumption capacities. For example, the power values of one or more of the available power consumption capacities may be summed over the minimum available period common to the one or more available power consumption capacities for determining the guaranteed load capacity. The guaranteed load capacity may be outputted to a user via a user interface.

Information about a guaranteed load capacity is useful for offering a consumption capacity in bid made in an auction of excess power that needs to be consumed. That is, in such a situation it is important for a consumer 103 to know what capacity can be guaranteed in a bid to an auction. Furthermore, information about a guaranteed load capacity is important for offering a standby capacity, i.e. a guaranteed available load capacity 201, to a network operator.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor, database or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An electrical power management system (400) for controlling one or more of a plurality of loads (301) connected to an electrical power network, the system comprises:
- a storage (420) containing load availability information about future periods of time wherein the loads are not activated,
- a consumption prediction system (430) for determining available power consumption capacities of one or more of the plurality of loads based on the load availability information and power consumption information of one or more of the loads, so that the available power consumption capacities are determined for the future periods of time wherein the loads are not activated,
- a planning system (440) for determining one or more of the plurality of loads that should be activated for consuming a contract power (202, 203) during a contract period (213), wherein the determining is performed so that a combination of one or more of the determined available power consumption capacities approximates the contract power,
- an input (490) for receiving a control input (208) indicating start of consuming the contract power during the contract period,
- an activation system (410) for activating the determined loads during the contract period, wherein
- the power management system is configured to determine the power consumption information at least in part from measured consumptions of one or more of the plurality of loads, wherein the measured consumptions are performed in a period of time wherein the loads are activated.

2. An electrical power management system according to any of the preceding claims, wherein loads (301) are street lights.

3. An electrical power management system according to any of the preceding claims, further comprising
- an input (491) for setting an availability status of loads, wherein
- the consumption prediction system is additionally configured for determining the available power consumption capacities of one or more of the plurality of loads based on the availability status of the loads.

4. An electrical power management system according to any of the preceding claims, further comprising
- a capacity system (480) for determining a guaranteed load capacity (201) over a given future period of time based on the load availability information and the available power consumption capacities.

5. An electrical power management system according to any of the preceding claims, wherein the planning system (440) is further configured for determining one or more of the plurality of loads that should be activated for consuming the contract power during the contract period depending on a priority value associated with one or more of the loads.

6. An electrical power management system according to any of the preceding claims, wherein the electrical power management system is configured for monitoring usage of one or more of the loads, wherein
- the planning system (440) is further configured for determining one or more of the plurality of loads that should be activated for consuming the contract power during the contract period based on the usage of the loads.

7. An electrical power management system according to any of the preceding claims, wherein the management system is configured to group one or more of the loads into a group of loads (302) so that the group has a pre-determined available power consumption, and wherein
- the planning system (440) is configured for determining one or more of the plurality of groups of loads that should be activated for consuming the contract power during the contract period, wherein the determining is performed so that a combination of one or more pre-determined available power consumption capacities approximates the contract power.

8. An electrical power management system according to any of the preceding claims, wherein
- the input (490) is configured to receive the control input containing input information relating to a power to be consumed and/or a period of time wherein power should be consumed, wherein the power management system is configured to determine the contract power and the contract period from the input information.

9. An electrical power management system according to any of the preceding claims, wherein the activation system (410) is configured for activating the determined loads during the contract period in response to the control input (208) after a delay (214).

10. An electrical power management method for consuming excess power, the method comprises:
- obtaining load availability information about future periods of time wherein the loads are not activated,
- determining available power consumption capacities of one or more of the plurality of loads based on the load availability information and power consumption information of one or more of the loads, so that the available power consumption capacities are determined for the future periods of time wherein the loads are not activated,
- determining one or more of the plurality of loads that should be activated for consuming a contract power during a contract period, wherein the determining is performed so that a combination of one or more of the determined available power consumption capacities approximates the contract power,
- receiving a control input indicating start of consuming the contract power during the contract period,
- activating the determined loads during the contract period.

11. A computer program product comprising program code instructions which when executed by a processor of a computer device enables the processor to carry out the method of claim 10.

12. A computer-readable medium comprising a computer program product according to claim 11.
